# EUROPÄISCHE PATENTANMELDUNG

(11) **EP 2 228 555 A1**
(43) Veröffentlichungstag der Anmeldung: **15.09.2010**
(21) Anmeldenummer: 10002476.9
(22) Anmeldetag: 10.03.2010
(51) Int. Cl.: F16C 33/10, F23R 3/00

(54) **Maschinenelement**

(30) Priorität: 10.03.2009 DE 102009011955
(71) Anmelder: Universität Stuttgart, 70174 Stuttgart (DE)
(72) Erfinder: Weigand, Bernhard, Prof. Dr.-Ing., 70794 Filderstadt (DE); Liebe, Roland, Dr.-Ing., 40789 Monheim am Rhein (DE); Spring, Sebastian, 70199 Stuttgart (DE)
(74) Vertreter: Wolf, Michael

(57) **Zusammenfassung**

Die Erfindung betrifft ein Maschinenelement, umfassend mindestens eine fluidbeströmte Wand (1, 2), wobei mindestens ein Teilbereich der Wand (1, 2) eine Vielzahl von Vertiefungen (3) aufweist, wobei jede Vertiefung (3) eine in Wandflächenebene liegende Querschnittsfläche mit einem bestimmten äquivalenten Durchmesser (D) aufweist, wobei jede Vertiefung (3) in Wandflächenebene von mindestens drei weiteren Vertiefungen (3) unmittelbar umgeben ist. Nach der Erfindung ist vorgesehen, dass die Summe der Querschnittsflächen der Vertiefungen (3) mindestens 30% der Fläche des Teilbereichs entspricht, dass ein jeweiliger Abstand (A) zwischen einer Vertiefung (3) und den drei weiteren unmittelbar umgebenden Vertiefungen (3) nicht größer als der zweifache äquivalente Durchmesser (D) der Vertiefung (3) ist, dass die Vertiefung (3) in Wandflächenebene einen mindestens fünfeckförmigen, vorzugsweise hexagonalen, oder einen einer geschlossenen, glatten Kurve entsprechenden Querschnitt, vorzugsweise einen kreisförmigen Querschnitt, aufweist und dass ein Verhältnis einer Tiefe (T) der Vertiefung (3) zum äquivalenten Durchmesser (D) weniger als 0,3 beträgt.

## Beschreibung

Die Erfindung betrifft ein Maschinenelement gemäß dem Oberbegriff des Patentanspruchs 1.

Ein Maschinenelement, insbesondere ein Gleitlager, der eingangs genannten Art ist nach der DE 197 00 339 C2 bekannt. Dieses besteht aus zwei zueinander beweglichen und mit einer Fluidschicht auf Abstand gehaltenen, gewölbten und in der Regel nicht zueinander parallel verlaufenden Wänden (im folgenden auch Gleitflächen genannt), wobei mindestens ein Teilbereich einer Gleitfläche eine Vielzahl von Vertiefungen (so genannte Schmieröltaschen) aufweist, wobei jede Vertiefung eine in Gleitflächenebene liegende Querschnittsfläche mit einem bestimmten äquivalenten (repräsentativen) Durchmesser aufweist, wobei jede Vertiefung in Gleitflächenebene von mindestens drei weiteren Vertiefungen unmittelbar umgeben ist. Die spezielle Gestaltung dieser Konstruktion dient dazu, den tragenden Druck auf Basis der hydrostatischen oder hydrodynamischen Wirkung von Vertiefungen zwischen den Gleitflächen zu erhöhen, wobei eine Maßgabe dieser Lösung darin besteht, dass die Fläche aller Schmieröltaschen (Vertiefungen) maximal 10% der gesamten Gleitfläche (Lagerfläche) beträgt (siehe Patentanspruch 2 der DE 197 00 339 C2).

Der Erfindung liegt die Aufgabe zugrunde, bei einem Maschinenelement, insbesondere einem Gleitlager, der eingangs genannten Art die Reibungsverluste des Fluids an der Wand zu verringern.

Diese Aufgabe ist mit einem Maschinenelement der eingangs genannten Art durch die im Kennzeichen des Patentanspruchs 1 aufgeführten Merkmale gelöst.

Nach der Erfindung ist also vorgesehen, dass die Summe der Querschnittsflächen der Vertiefungen mindestens 30% der Fläche des Teilbereichs entspricht, dass ein jeweiliger Abstand zwischen einer Vertiefung und den drei weiteren unmittelbar umgebenden Vertiefungen nicht größer als der zweifache äquivalente Durchmesser der Vertiefung ist, dass die Vertiefung in Wandflächenebene einen mindestens fünfeckförmigen, vorzugsweise hexagonalen, oder einen einer geschlossenen, glatten Kurve entsprechenden Querschnitt, vorzugsweise einen kreisförmigen Querschnitt, aufweist und dass ein Verhältnis einer Tiefe der Vertiefung zum äquivalenten Durchmesser weniger als 0,3 beträgt.

Mit anderen Worten ist nach der Erfindung eine erheblich grössere Anzahl von Vertiefungen mit spezieller Geometrie vorgesehen, die zudem noch sehr dicht neben einander angeordnet sind. Diese Maßgaben führen insbesondere zu einer Absenkung der Fluid-Wandreibungsverluste sowie zu einer Erhöhung der Wärmeübergangszahl, was wiederum eine bessere Kühlwirkung (Abbau von Temperaturgradienten) zur Folge hat. Hierdurch treten weniger thermische Verformungen auf und die Lebensdauer des Maschinenelements erhöht sich insgesamt.

Genauer betrachtet, sind die erfindungsgemäßen Mikro-Vertiefungen so gestaltet, dass durch eine optimale Rezirkulation des Fluids in den Vertiefungen gleichmäßig verteilte, intensive Wirbelbewegungen entstehen. Synchrone, pendelnde Bewegungen sich dabei ergebender Wirbelpaare finden sich primär in den Vertiefungen, aber auch im Bereich der Grenzschichtdicke δ und in sehr engen (wenige µm) wie auch in weiten (ca. 100 µm und darüber) Fluidspalten. Großflächig bilden sich regelmäßige Wirbelmuster im Gleich- und im Gegentakt aus (Wirbelmechanismus). Ihre hydrodynamische und mischende Wirkung verbessert außerdem die Trag-, Kühl- und Dichtfunktion der periodisch instationären Fluid- bzw. Spaltströmung, und zwar insbesondere auch im Vergleich zur eingangs beschriebenen Lösung. Insgesamt beeinflussen die Wirbelbewegungen bzw. die Wirbelrollen sowohl den Geschwindigkeits- (und damit die Wandschubspannung T) als auch den Temperaturgradienten (und damit die Wärmeübergangszahl α) an der Wand in günstiger Weise. Entgegen der klassischen Reynolds-Analogie (gleichzeitige Erhöhung der Wandschubspannung T und der Wärmeübergangszahl α) werden erfindungsgemäß zwei erwünschte Effekte erzielt, nämlich eine Absenkung der Wandschubspannung bei einer gleichzeitigen Erhöhung des Wärmeübergangs. Thermische Verformungen und Verstülpungen der Wand- bzw. Gleitflächenstruktur werden auf diese Weise kleiner; es resultiert ein stark abgesenkter Verschleiß an den Gleitflächen und damit eine günstigere, robustere Betriebscharakteristik. Die Standzeit und die Design-Lebensdauer steigen an.

Andere vorteilhafte Weiterbildungen des erfindungsgemäßen Maschinenelements, das für den allgemeinen Maschinenbau, insbesondere aber auch für den Turbomaschinenbau auch als Gleitlager, als Gleitringdichtung (jeder Bauform), als Schwimmringdichtung (jeder Bauart), als Zylinder-Kolben-Kombination oder - allgemeiner ausgedrückt - als strömungsführende und/oder wärmeübertragende Fläche (rotierend oder feststehend) ausgebildet sein kann, ergeben sich aus den abhängigen Patentansprüchen.

Der Vollständigkeit halber wird noch auf die DE 30 12 797 A1, die DE 100 60 813 A1, die DE 10 2007 048 500 A1, die DE 22 34 428 A1, die US 5,932,049 A und die US 2004/0228554 A1 hingewiesen:

Aus der DE 30 12 797 A1 ist eine gleitbeanspruchte Oberfläche mit einer gerasterten, speziell aufgetragenen Profilschicht bekannt.

Weiterhin ist nach der DE 100 60 813 A1 ein Gleitkörper bekannt, bei dem zur Erhöhung des Druckgradienten und damit zur Verbesserung der Tragfähigkeit rampenartige Vertiefungen vorgesehen sind.

Gemäß der DE 10 2007 048 500 A1 ist ein Gleitlager bekannt, bei dem Vertiefungen in Form von länglichen Primärtaschen und schräg angeordneten keilförmigen Sekundärtaschen vorgesehen sind. Der Effekt einer verbesserten Belastbarkeit und einer Schmiermittelrückhaltefunktion resultiert aus der speziellen Anordnung der Taschen, die eine Führung des Schmiermittels von den Kanten weg hin zur Mittellinie des Lagers bewirken.

Aus der DE 22 34 428 A1 ein Verfahren zur Verbesserung der Verschleißeigenschaften zweier sich gegeneinander bewegender Flächen bekannt, d. h. bei dieser Lösung reibt ein Festkörper auf dem anderen; ein eventuell vorgesehenes Fett dient zur Schmierung, eine reine Flüssigkeitsreibung, wie bei der erfindungsgemäße Lösung ist aber nicht gegeben.

Aus der US 5,932,049 A ist ein Gleitlager mit verbesserter Druckerhöhung im Schmierkeil bekannt. Die offenbarten rechteckigen Vertiefung sind aus geometrischen Gründen nicht geeignet, den oben beschriebenen, der Reduktion der Wandschubspannung dienenden Wirbelmechanismus auszulösen.

Aus der US 2004/0228554 A1 ist schließlich ein Gleitelement bekannt, bei dem der erfindungsgemäße Wirbelmechanismus nicht auftreten kann, da die vorgesehenen Vertiefung zu tief ausgebildet sind.

Das erfindungsgemäße Maschinenelement einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

### Es zeigt

- Figur 1: im Schnitt das erfindungsgemäße, als in die Ebene abgewickeltes Gleitlager ausgebildete Maschinenelement;
- Figur 2: in Draufsicht einen Teilbereich der mit Vertiefungen versehene Gleitfläche gemäß Figur 1 und
- Figur 3: ein schematisches Diagramm, bei dem die (dimensionslose) Geschwindigkeit u⁺ des Fluids über dem (dimensionslosen) Abstand y⁺ zur Wand aufgetragen ist, und zwar für eine Strömung mit (a) und eine turbulente Strömung ohne (b) die erfindungsgemäßen Vertiefungen.

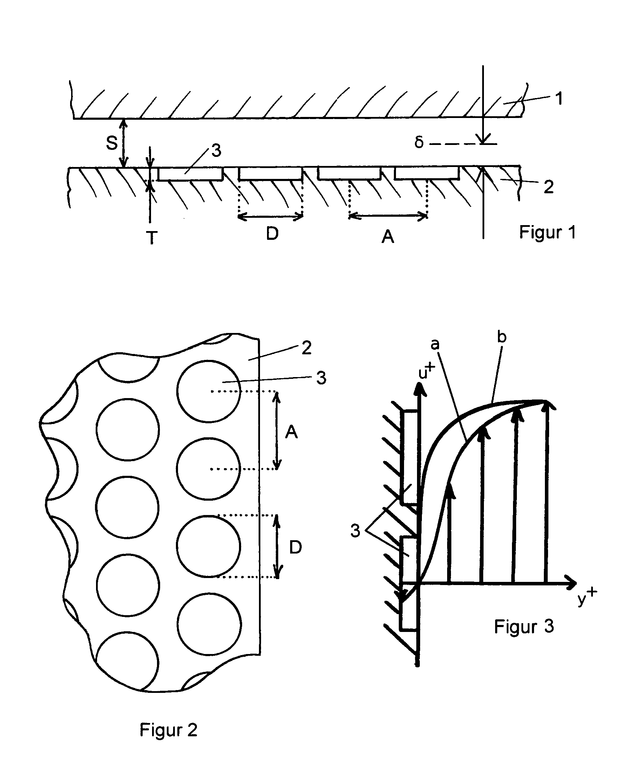

Das Maschinenelement bzw. das Gleitlager gemäß den Figuren 1 und 2 besteht aus zwei unter Flüssigkeitsreibung (bzw. festkörper- oder trockenreibungsfrei) zueinander beweglichen und mit einer Fluidschicht auf Abstand S gehaltenen Wänden (Gleitflächen) 1, 2 (Anmerkung: die Wände 1, 2 können, müssen aber nicht, wie dargestellt, parallel zueinander verlaufen; außerdem kann auch nur eine Wand mit Vertiefungen vorgesehen sein), wobei mindestens ein Teilbereich einer Wand 1, 2 eine Vielzahl von Vertiefungen 3 aufweist. Die Maßgabe "Teilbereich" bringt dabei zum Ausdruck, dass nicht zwingend die gesamte Fläche der Wand 1, 2 mit Vertiefungen 3 versehen sein muss (aber je nach Anwendungsfall sein kann), dass aber zumindest ein Teilbereich den nachfolgenden Maßgaben entspricht, nämlich, dass jede Vertiefung 3 eine in Wandflächenebene liegende Querschnittsfläche mit einem bestimmten äquivalenten Durchmesser D aufweist, wobei jede Vertiefung 3 in Wandflächenebene von mindestens drei weiteren Vertiefungen 3 unmittelbar umgeben ist: In Figur 2 ist jede Vertiefung 3 am Rand der Teilfläche von vier weiteren Vertiefungen 3 umgeben, im mittleren Bereich der Teilfläche sogar von sechs Vertiefungen 3. Die oben genannte Maßgabe "mindestens drei" ergibt sich zum Beispiel dann, wenn die Vertiefungen 3 auf den Knotenpunkten eines gedachten rechteckigen Gitternetzes angeordnet sind.

Der dem Fachmann bekannte Begriff "äquivalent" wird verwendet, um die erfindungsgemäßen Maßgaben auch auf im Querschnitt nicht kreisrunde Vertiefungen 3 anwenden zu können (bei einem kreisrunden Querschnitt entspricht natürlich der äquivalente Durchmesser exakt dem tatsächlichen Durchmesser des Kreisquerschnitts).

Wesentlich für das erfindungsgemäße Gleitlager ist nun, dass zur Reduzierung der Wandschubspannungen T und zur Steigerung der Wärmeübergangszahl α die Summe der Querschnittsflächen der Vertiefungen 3 mindestens 30% der Fläche des Teilbereichs entspricht und dass ein jeweiliger Abstand A zwischen einer Vertiefung 3 und den drei weiteren unmittelbar umgebenden Vertiefungen 3 nicht größer als der zweifache äquivalente Durchmesser D der Vertiefung 3 ist. Dabei ist wichtig, dass die Tiefe T der Vertiefungen 3 die lokale Grenzschichtdicke δ nicht übersteigt.

Konkret ausgedrückt, bedeutet dies, dass bei einer Teilfläche von 100 Flächeneinheiten mindestens 30 Flächeneinheiten von den Vertiefungen 3 "eingenommen" bzw. "belegt" sind. Zur weiteren Erhöhung des erfindungsgemäßen Effekts ist bevorzugt sogar vorgesehen, dass 50 (oder sogar 70) Flächeneinheiten bzw. 50% (oder sogar 70%) der Gesamtfläche mit Vertiefungen 3 versehen sind, und zwar auch mit sehr unterschiedlichen Formen, Mustern, Geometrien, Radien und "Belegungsdichten" der Vertiefungen.

Weiterhin ist durch die Abstandsmaßgabe A zwischen den Vertiefungen 3 gewährleistet, dass keine allzu breiten Stege zwischen den Vertiefungen 3 entstehen können, da diese für den erfindungsgemäßen Effekt abträglich wären: In Bezug auf Figur 2 ergibt sich zwischen zwei schräg nebeneinander liegenden Vertiefungen ein Verhältnis von 1,375 (bei einem äquivalenten Durchmesser von 16 Längeneinheiten und einem Abstand von 22 Längeneinheiten). In Vertikalrichtung ergibt sich sogar ein noch kleineres Verhältnis von 1,25.

Weiterhin ist zur Realisierung des erfindungsgemäßen Effekts vorgesehen, dass ein Verhältnis einer Tiefe T der Vertiefung 3 zum äquivalenten Durchmesser D weniger als 0,3, vorzugsweise zwischen 0,05 und 0,3, beträgt. Beim Ausführungsbeispiel nach Figur 1 und 2 beträgt dieses Verhältnis 0,18.

Prinzipiell sind die Kenngrößen der Strukturierung (äquivalenter Durchmesser D, Tiefe T, Abstand A) in geeigneter Weise und strömungsabhängig zu wählen. Dabei sind die Haupteinflußgrößen: Reynoldszahl, Grenzschichtdicke, Dichte, Temperatur, kinetische Zähigkeit des Fluids, Wandschubspannung, Strömungsart (laminar bzw. turbulent).

Figur 3 verdeutlich dabei anschaulich, dass die Rezirkulation im Bereich der Vertiefung 3 zu einer Senkung des Geschwindigkeitsgradienten und damit zur Reduzierung der Wandschubspannung T führt.

Ferner ist vorgesehen, dass die Vertiefung 3 eine Tiefe T aufweist, die kleiner gleich der Grenzschichtdicke δ zwischen den Wänden (Gleitflächen) 1, 2 ist. Gemäß Figur 1 weist die Vertiefung 3 eine Tiefe T von 3 Längeneinheiten auf, während der Abstand S 12 Längeneinheiten entspricht.

Allgemein betrachtet, sind bei einer technischen Auslegung eines konkreten Maschinenelements zur optimalen Ausbildung des erfindungsgemäßen Wirbelmechanismus' und der sich einstellenden Wirbeloszillation die Zusammenhänge zwischen der Tiefe T, der Reynolds-Zahl Re (der Spalt- oder Kanalströmung), damit der Grenzschichtdicke und der Strouhal-Zahl Sr zu beachten. Besonders bevorzugt ist dabei ein Verhältnis zwischen der Tiefe T und der sich einstellenden Grenzschichtdicke von kleiner gleich 1 vorgesehen.

Bezüglich der Form der Vertiefungen 3 ist vorgesehen, dass diese in Bezug auf die Wand- bzw. Gleitflächenebene wahlweise einen mindestens fünfeckförmigen, vorzugsweise hexagonalen oder kreisförmigen Querschnitt aufweisen, wobei unter diese Maßgabe auch siebeneckige, achteckige, elliptische und so weiter Querschnitte fallen. Weiterhin können die Vertiefung 3 - senkrecht zur Wand- bzw. Gleitfläche 2 gesehen - und im Unterschied zu Figur 1 (dort sind sie zylinderförmig) auch kalottenförmig oder dergleichen ausgebildet sein.

Schließlich ist zur Ausbildung der Vertiefungen 3 eine Bearbeitung der Wände bzw. Gleitflächen 1, 2 mittels Lasertechnik, mittels Ätzen, mittels lithografischer Galvanik, mittels Walzen/Pressen, mittels Elektroerodieren, mittels Beschichten und Prägen sowie mittels Aufbringen von strukturierten Folien vorgesehen.

### Bezugszeichenliste

- 1: Wand
- 2: Wand
- 3: Vertiefung
- A: Abstand zwischen zwei Vertiefungen
- D: äquivalenter Durchmesser
- S: Abstand zwischen den Wänden
- T: Tiefe der Vertiefung
- y: Koordinate des Wandabstandes
- δ: Grenzschichtdicke

## Patentansprüche

1. Maschinenelement, umfassend mindestens eine fluidbeströmte Wand (1, 2), wobei mindestens ein Teilbereich der Wand (1, 2) eine Vielzahl von Vertiefungen (3) aufweist, wobei jede Vertiefung (3) eine in Wandflächenebene liegende Querschnittsfläche mit einem bestimmten äquivalenten Durchmesser (D) aufweist, wobei jede Vertiefung (3) in Wandflächenebene von mindestens drei weiteren Vertiefungen (3) unmittelbar umgeben ist,
**dadurch gekennzeichnet,**
**dass** die Summe der Querschnittsflächen der Vertiefungen (3) mindestens 30% der Fläche des Teilbereichs entspricht,
**dass** ein jeweiliger Abstand (A) zwischen einer Vertiefung (3) und den drei weiteren unmittelbar umgebenden Vertiefungen (3) nicht größer als der zweifache äquivalente Durchmesser (D) der Vertiefung (3) ist,
**dass** die Vertiefung (3) in Wandflächenebene einen mindestens fünfeckförmigen, vorzugsweise hexagonalen, oder einen einer geschlossenen, glatten Kurve entsprechenden Querschnitt, vorzugsweise einen kreisförmigen Querschnitt, aufweist und
**dass** ein Verhältnis einer Tiefe (T) der Vertiefung (3) zum äquivalenten Durchmesser (D) weniger als 0,3 beträgt.

2. Maschinenelement nach Anspruch 1,
**dadurch gekennzeichnet,**
**dass** ein Verhältnis einer Tiefe (T) der Vertiefung (3) zum äquivalenten Durchmesser (D) zwischen 0,05 und 0,3 beträgt.

3. Maschinenelement nach Anspruch 1 oder 2,
**dadurch gekennzeichnet,**
**dass** zwei zueinander bewegliche und mit einer Fluidschicht auf Abstand (S) gehaltene Wände (1, 2) vorgesehen sind.

4. Maschinenelement nach Anspruch 3,
**dadurch gekennzeichnet,**
**dass** die Vertiefung (3) eine Tiefe (T) aufweist, die kleiner gleich dem Abstand (S) der Wände (1, 2) ist.

5. Maschinenelement nach einem der Ansprüche 1 bis 4,
**dadurch gekennzeichnet,**
**dass** die Summe der Querschnittsflächen der Vertiefungen (3) mindestens 50% der Fläche des Teilbereichs entspricht.

6. Maschinenelement nach einem der Ansprüche 1 bis 5,
**dadurch gekennzeichnet,**
**dass** mindestens eine Wand (1, 2) vollflächig mit Vertiefungen (3) versehen ist.

7. Maschinenelement nach einem der Ansprüche 1 bis 6,
**dadurch gekennzeichnet,**
**dass** zur Ausbildung der Vertiefungen (3) eine Bearbeitung der Wände (1, 2) mittels Lasertechnik, mittels Ätztechnik, mittels lithografischer Galvanik, mittels Walzen/Pressen, mittels Elektroerodieren, mittels Beschichten und Prägen sowie mittels Aufbringen von strukturierten Folien vorgesehen ist.

8. Maschinenelement nach einem der Ansprüche 1 bis 7,
**dadurch gekennzeichnet,**
**dass** das Maschinenelement wahlweise als Gleitlager, als Gleitringdichtung, als Zylinder-Kolben-Kombination oder als strömungsführende und/oder wärmeübertragende Fläche ausgebildet ist.
